# EUROPÄISCHE PATENTSCHRIFT

(11) **EP 3 094 961 B1**
(45) Veröffentlichungstag und Bekanntmachung des Hinweises auf die Patenterteilung: **28.04.2021**
(21) Anmeldenummer: 15700529.9
(22) Anmeldetag: 19.01.2015
(51) Int. Cl.: G01N 21/03, G01N 21/05, G01N 21/31

(54) **VORRICHTUNG ZUM BESTIMMEN EINER KONZENTRATION EINES IN EINER FLÜSSIGKEIT GELÖSTEN CHEMISCHEN STOFFES**
DEVICE FOR DETERMINING A CONCENTRATION OF A CHEMICAL SUBSTANCE DISSOLVED IN A LIQUID
DISPOSITIF DE DÉTERMINATION D'UNE CONCENTRATION D'UNE SUBSTANCE CHIMIQUE DISSOUTE DANS UN LIQUID

(30) Priorität: 17.01.2014 DE 102014000651
(43) Veröffentlichungstag der Anmeldung: 23.11.2016
(73) Patentinhaber: Gottfried Wilhelm Leibniz Universität Hannover, 30167 Hannover (DE)
(72) Erfinder: RISSING, Lutz, 80337 München (DE); HOLZ, Stephanie, 31832 Springe / Altenhagen (DE); HOHEISEL, Dominik, 30419 Hannover (DE)
(74) Vertreter: Gramm, Lins & Partner Patent- und Rechtsanwälte PartGmbB
(86) Internationale Anmeldenummer: PCT/EP2015/000076
(87) Internationale Veröffentlichungsnummer: WO 2015/106969

(56) Entgegenhaltungen:
- WO-A1-2004/023114
- WO-A1-2013/119320
- DE-A1- 10 023 000
- DE-B4-102010 050 626
- US-A1- 2005 200 848
- David Bomse: "Final Report | A Compact, Low-Cost, Near-UV Sensor for Chlorine Dioxide | Research Project Database | NCER | ORD | US EPA", , 4. Juni 2007 (2007-06-04), XP055175099, Gefunden im Internet: URL:http://cfpub.epa.gov/ncer_abstracts/in dex.cfm/fuseaction/display.highlight/abstr act/7941/report/F [gefunden am 2015-03-10]

## Beschreibung

Die Erfindung betrifft eine Vorrichtung zum Bestimmen einer Konzentration eines in einer Flüssigkeit gelösten chemischen Stoffes, der Licht einer Absorptionswellenlänge absorbiert, wobei die Vorrichtung wenigstens eine Durchströmkammer mit wenigstens einer Einlassöffnung, wenigstens einer Auslassöffnung und wenigstens einer Umfangswandung, wenigstens einen Laser zum Aussenden von Licht der Absorptionswellenlänge und wenigstens einen Detektor zum Detektieren des ausgesandten Lichtes aufweist, wobei der Laser und der Detektor derart angeordnet sind, dass das von dem Laser ausgesandte Licht entlang wenigstens zweier unterschiedlicher Pfade durch die Durchströmkammer geleitet wird, bevor es auf den Detektor trifft. Beschrieben wird zudem ein Verfahren zum Herstellen einer Durchströmkammer für eine derartige Vorrichtung.

In vielen unterschiedlichen technischen Anwendungsbereichen ist es nötig und von Vorteil, eine Konzentration eines in einer Flüssigkeit gelösten chemischen Stoffes zu kennen. Ein besonders wichtiges Beispiel stellt dabei die Trinkwasseraufbereitung dar, bei der es gilt, Schadstoffe organischer und anorganischer Natur aus dem Trinkwasser zu entfernen. Dazu wurden in der Vergangenheit unterschiedliche Verfahren eingesetzt.

Weit verbreitet sind dabei chemische Verfahren, bei denen beispielsweise durch das Zufügen von wässrigen Chlorlösungen Schadstoffe und Keime dadurch abgetötet werden, dass die jeweiligen unerwünschten Bestandteile des Trinkwassers mit den Chloratomen reagieren, sodass neue Chlorverbindungen entstehen. Diese sind in geringer Konzentration zwar nicht gesundheitsschädlich, führen jedoch zu Haut- und Schleimhautreizungen wie beispielsweise Chlorflecken oder tränenden Augen.

Als Alternative zur Verwendung wässriger Chlorlösungen wurde Chlordioxid als keimabtötender Zusatz eingeführt. Dies hat den Vorteil, dass durch das Chlordioxid keine Chlorverbindungen mit den unerwünschten Bestandteilen des Wassers eingegangen werden, sondern dass stattdessen die unerwünschten Bestandteile durch Oxidation zerstört werden. Dadurch wird auch der pH-Wert des Wassers nahezu nicht verändert. Ein weiterer Vorteil des Chlordioxids ist, dass es in den üblichen Trinkwasseranwendungskonzentrationen nahezu geruchlos und geschmacksneutral ist. In zu großen Dosen verwendet ist es jedoch gesundheitsschädlich. Daher muss bei der Verwendung von Chlordioxid die Konzentration dieses Stoffes im Wasser überwacht werden, sodass nur für den Menschen unschädliche Konzentrationen im Trinkwasser vorhanden sind.

Um Chlordioxidkonzentrationen zu messen, werden beispielsweise ionenselektive Elektroden oder Sonden vorgeschlagen, wie dies beispielsweise in der DE 60 2004 011 063 T2 der Fall ist. Alternativ dazu werden auch amperometrische Messzellen, wie sie beispielsweise in der DE 100 31 560 A1 beschrieben werden, verwendet. In der DE 20 2010 007 065 U1 wird ein Chlorid-Messsystem beschrieben, bei dem eine Kombination aus Messzweigen und Messzellen, die in eine wässrige Lösung getaucht werden, Verwendung findet. Ein weiterer amperometrischer und voltametrischer Sensor wird in der DE 103 22 894 A1 beschrieben.

Alle diese Vorrichtungen und Verfahren weisen jedoch den Nachteil auf, dass sie einerseits einen hohen apparativen Aufwand erfordern und mit einem unabhängigen kolorimetrischen Verfahren wie der DPD-Bestimmung kalibriert werden müssen. Dies gilt insbesondere für die amperometrischen und voltametrischen Sensoren. Für die Bestimmung der Chlordioxidkonzentration im Trinkwasser sind diese Verfahren und Sensoren daher nur bedingt geeignet, da die kolorimetrischen Messmethoden bei zum Beispiel höheren Temperaturen durch den erhöhten Dampfdruck des Chlordioxids und somit dessen Verlust vor Detektion mit hohen Fehlern behaftet sind und somit die beschriebenen Verfahren und Sensoren nicht verlässlich kalibriert werden können. Die Messung von konzentrierten Chlordioxidlösungen im Bericht von Gramm/Liter sind ferner auch nicht verlässlich durchführbar.

Die WO 2010/096074 A1 beschreibt einen Chlordioxidsensor, mit dem gasförmiges Chlordioxid nachgewiesen werden kann. Das Gasgemisch, das Chlordioxid enthält, wird durch eine Durchströmkammer geleitet und in dieser Kammer mit einer ultraviolettes Licht ausstrahlenden LED beleuchtet. Dabei sendet die LED beispielsweise für 50 ms Licht aus. Zwischen zwei dieser Lichtpulse liegen ca. 5 Sekunden, in denen kein Licht ausgesendet wird.

Chlordioxid absorbiert Licht mit einer Absorptionswellenlänge von ca. 360 nm. Die UV-LED sendet Licht genau dieser Wellenlänge aus, sodass am der LED gegenüberliegenden Ende der Durchströmkammer ein Detektor in der Lage ist, die Intensität des ankommenden Lichtes dieser Absorptionswellenlänge zu messen. Aus dem Intensitätsverlust, der ein Maß für den Grad der Absorption des Lichtes im Innern der Durchströmkammer ist, lässt sich die Konzentration des Chlordioxids bestimmen.

Die sehr lange Pause zwischen zwei aufeinanderfolgenden Impulsen bei einem Sensor gemäß der WO 2010/096074 A1 ist der Photoreaktivität des Chlordioxids geschuldet. So wird als vorteilhaft beschrieben, dass die Vorrichtung in einem lichtundurchlässigen Kasten eingesetzt wird, um zu verhindern, dass das Chlordioxid zu viel Streulicht ausgesetzt wird. Dabei könnten toxische und/oder explosive Substanzen entstehen, was naturgemäß zu vermeiden ist.

Der in der genannten Druckschrift beschriebene Sensor ist für die Detektion von Chlordioxid in Wasser nicht geeignet, da der Absorptionsquerschnitt des Chlordioxids in Wasser stark abnimmt, so dass insbesondere kleine Konzentrationen, die insbesondere bei der Untersuchung von Trinkwasser von Interesse sind, nicht mehr nachgewiesen können.

Nachteilig bei dem in der WO 2010/096074 A1 beschriebenen Detektor ist zudem, dass ein relativ großer Detektionsbereich eingesetzt werden muss, um eine ausreichende Menge Chlordioxidmoleküle mit dem eingestrahlten UV-Licht zu treffen, um zu einer messbaren Absenkung der Intensität zu gelangen. Daher sind die dort beschriebenen Detektoren sehr kostenintensiv und platzaufwändig.

Aus dem Stand der Technik sind eine Reihe von gattungsgemäßen Vorrichtungen bekannt. So beschreibt die US 5,485,276 ein Verfahren zum Überwachen einer Konzentration eines in einem Fluid gelösten chemischen Stoffes. Die DE 10 2009 025 147 B3, die DE 10 2010 050 626 B4 und die EP 1 535 047 B1 beschreiben Gasspektrometer, die alle Laserlicht verwenden und auf der Messung der Absorption dieses Lichtes beruhen. Die WO 2006/132380 A2 und die US 2007/0215817 A1 beschreiben jeweils Verfahren und Vorrichtungen zum Nachweis von Einzelmolekülen, wobei sich die US-Druckschrift insbesondere auf DNA-Moleküle spezialisiert. Aus der US 8,253,930 B2 ist eine Vorrichtung zum Bestimmen der Feuchtigkeitsmenge in einem Gas bekannt. Alle diese Vorrichtungen sind jedoch für qualitativ hochwertige Messungen der Konzentration eines in einer Flüssigkeit gelösten chemischen Stoffes nicht geeignet.

Die US 2005/0200848 A1 beschreibt ein Verfahren zum Nachweisen von Ozon in ozonisiertem Wasser, das ebenfalls auf Absorptionsmessungen beruht. Als Lichtquelle werden LEDs verwendet. Dem Artikel "Final Report: A compact, low-cost, near-UV sensor for chlorine dioxide" aus der Research Project Data Base NCER ORD USEPA vom 4. Juni 2007 sowie der WO 2013/119320 A1 sind Verfahren und Vorrichtungen bekannt, die nachzuweisenden Verbindungen in Gasen aufzufinden. Die DE 100 23 000 A1 hingegen beschreibt ein Absorptionsmessungsverfahren zum Bestimmen der Konzentration einer Substanz, bei der Teillichtstrahlen an der Probe vorbei als Referenzmessung geführt werden.

Der Erfindung liegt daher die Aufgabe zugrunde, eine Vorrichtung zum Bestimmen einer Konzentration eines in einer Flüssigkeit gelösten chemischen Stoffes, der Licht einer Absorptionswellenlänge absorbiert, vorzuschlagen, die auch kleine Konzentrationen des Stoffes in der Flüssigkeit sicher und verlässlich detektieren kann und zudem baulich klein ausgebildet werden kann. Der Erfindung liegt zudem die Aufgabe zugrunde, ein Verfahren zur Herstellung einer Durchströmkammer für eine derartige Vorrichtung vorzuschlagen.

Die Erfindung löst die gestellte Aufgabe durch eine Vorrichtung zum Bestimmen einer Konzentration eines in einer Flüssigkeit gelösten chemischen Stoffes, der Licht einer Absorptionswellenlänge absorbiert, gemäß Anspruch. Auch die Vorrichtung gemäß der vorliegenden Erfindung macht sich folglich den Umstand zunutze, dass der zu detektierende chemische Stoff Licht einer Absorptionswellenlänge absorbiert. Durch die Durchströmkammer wird im Betrieb der Vorrichtung die Flüssigkeit geleitet, in der sich der gelöste chemische Stoff befindet. Dabei wird die Flüssigkeit durch die wenigstens eine Einlassöffnung in die Durchströmkammer eingeleitet und verlässt diese durch die mindestens eine Auslassöffnung. Durch den Laser wird Licht der Absorptionswellenlänge in die Durchströmkammer eingeleitet, die es entlang wenigstens zweier unterschiedlicher Teilpfade passiert. Anschließend trifft das Licht auf den Detektor, der eingerichtet ist, um die Intensität dieses Lichtes zu detektieren. Aus der bekannten Einstrahlintensität und der detektierten Messintensität lässt sich der Grad der Absorption des Lichtes im Innern der Durchströmkammer ermitteln, der ein direktes Maß für die Konzentration des chemischen Stoffes, beispielsweise des Chlordioxids, ist. Die Vorrichtung verfügt dabei vorzugsweise, jedoch nicht notwendigerweise, über eine elektrische Steuerung, die eingerichtet ist, aus den Messwerten des Detektors und der bekannten eingestrahlten Lichtintensität durch den Laser die Konzentration des chemischen Stoffes in der Flüssigkeit zu bestimmen.

Die erfindungsgemäße Vorrichtung ist auch geeignet, beispielsweise Chlordioxid in Wasser nachzuweisen. Da zur Detektion ein Laser verwendet wird, der eine deutlich größere Lichtintensität in die Durchströmkammer sendet, als dies durch die aus dem Stand der Technik bekannte UV-LED der Fall ist, wird der geringere Absorptionsquerschnitt des Chlordioxids im Wasser kompensiert, so dass ein Messsignal mit ausreichender Auflösung erhalten wird.

Durch das Merkmal, dass das Licht die Durchströmkammer entlang wenigstens zweier unterschiedlicher Teilpfade durchläuft, wird zudem erreicht, dass die Weglänge des Lichtes in der Durchströmkammer größer gewählt werden kann, als eine räumliche Ausdehnung der Durchströmkammer in einer Raumrichtung. Dadurch trifft das Licht auf seinem Weg durch die Durchströmkammer auf mehr Moleküle des nachzuweisenden chemischen Stoffes, sodass die Detektionsempfindlichkeit der Vorrichtung deutlich erhöht wird. Auf diese Weise wird erreicht, dass beispielsweise auch Chlordioxid in Wasser in Konzentrationen nachgewiesen werden kann, die für den Menschen nicht gesundheitsschädlich sind. Nachweisbare Konzentrationen können dabei durchaus im Bereich von "parts per billion" (ppb) liegen. Mit den Chlordioxidsensoren, die aus dem Stand der Technik bekannt sind, ist es bisher nicht möglich, derartig kleine Konzentrationen in Wasser sicher und verlässlich nachzuweisen.

Es ist bekannt, mit einer Vorrichtung gemäß dem Oberbegriff des Anspruchs 1, Konzentrationen eines in einem Gas verteilten chemischen Stoffes zu bestimmen. Die Verwendung einer derartigen gattungsgemäßen Vorrichtung ohne das erfindungsgemäße Merkmal zur Bestimmung einer Konzentration eines gelösten chemischen Stoffes in einer Flüssigkeit, beispielsweise Wasser, führt zwar zu einem Messwert, da ein Teil der Laserstrahlung absorbiert wird, eine belastbare Aussage über die in der Flüssigkeit enthaltene Konzentration des chemischen Stoffes ist jedoch nicht möglich. Der Erfindung liegt die Erkenntnis zugrunde, dass ein Teil des eingestrahlten Laserlichtes der Absorptionswellenlänge absorbiert wird, obwohl es nicht auf den nachzuweisenden chemischen Stoff trifft. Anders als in einem zu untersuchenden Gas sind in einer Flüssigkeit Verunreinigungen, beispielsweise in Form von kleinen Bläschen oder Schwebstoffen, enthalten, die ebenfalls für eine Absorption oder Streuung des eingestrahlten Laserlichtes sorgen und so das Messergebnis verfälschen. Diese Effekte sind nahezu unabhängig von der Wellenlänge des eingestrahlten Lichtes. Dies macht sich die Erfindung zu Nutze, indem sie einen zweiten Laser verwendet, der Licht einer Wellenlänge aussendet, die vorteilhafterweise nicht von dem gelösten chemischen Stoff, dessen Konzentration zu bestimmen ist, absorbiert wird. Auch das Licht des zweiten Lasers wird durch die Durchströmkammer geleitet. Auch dieses Licht wird folglich an den Verunreinigungen gestreut, so dass nicht die ganze eingestrahlte Laserintensität des zweiten Laserlichtes, das von dem zweiten Laser ausgesandt wird, am Detektor detektiert wird. Dabei ist sichergestellt, dass die so bestimmte Intensitätsabnahme des zweiten Laserlichtes, das von dem zweiten Laser ausgesandt wird, nicht durch den nachzuweisenden chemischen Stoff hervorgerufen wird. Aus beiden Intensitätsabnahmen des bei beiden Wellenlängen von den beiden Lasern ausgesandten Lichtes lässt sich auf diese Weise der Einfluss der Streumechanismen bestimmen und aus der Intensitätsabnahme des Lichtes der Absorptionswellenlänge herausrechnen. Auf diese Weise können verlässliche Aussagen über die Konzentration des nachzuweisenden chemischen Stoffes getroffen werden, da sichergestellt ist, dass wellenlängenunabhängige Effekte, wie beispielsweise Streuung an Verunreinigungen, berücksichtigt wurden.

In einer vorteilhaften Ausgestaltung der Vorrichtung verfügt die Umfangswandung über zumindest einen Reflextionsabschnitt, der so angeordnet ist, dass von dem Laser ausgesandtes Licht an dem Reflexionsabschnitt von einem ersten Pfad auf einen zweiten Pfad umgelenkt wird. Der Reflexionsabschnitt kann dabei beispielsweise ein an der Umfangswandung befestigter Spiegel sein, auf den das von dem Laser ausgesandte Licht der Absorptionswellenlänge trifft. Diese Ausgestaltung mit einem einzigen Reflexionsabschnitt hat den Vorteil, dass Laser und Detektor auf der gleichen Seite der Umfangswandung der Durchströmkammer angeordnet werden können. Dies ist naturgemäß auch mit jeder anderen ungraden Anzahl von Reflexionsabschnitten der Fall. Zudem wird durch diese Ausgestaltung erreicht, dass das Licht nur an einer Stelle in die Durchströmkammer hineingeleitet und an nur einer Stelle aus der Durchströmkammer herausgeleitet werden muss, und dennoch zwei voneinander verschiedene Pfade im Innern der Durchströmkammer durchlaufen kann. Wird das von dem Laser ausgesandte Licht nur einmal im Innern der Durchströmkammer reflektiert, bildet der Pfad vor der Reflexion den ersten Pfad, während das Licht nach der Reflexion den zweiten Pfad durchläuft.

Als vorteilhaft hat sich dabei herausgestellt, wenn das Licht von dem Laser beispielsweise an einer Stelle der Umfangswandung in die Durchströmkammer eingeführt wird und sich in der Durchströmkammer unter einem Winkel, der ungleich 0° und ungleich 90° ist, relativ zu einer Längserstreckung der Durchströmkammer ausbreitet. Diese Längserstreckung verläuft vorteilhafterweise in einer Richtung, der auch der Durchströmrichtung entspricht, in der die Flüssigkeit mit dem zu detektierenden chemischen Stoff von der Einlassöffnung zur Auslassöffnung der Durchströmkammer strömt. Die Durchströmkammer selbst kann dabei beispielsweise hohlzylinderförmig oder hohlquaderförmig ausgebildet werden. Natürlich sind auch sämtliche anderen geometrischen Ausgestaltungen der Durchströmkammer denkbar. Das vom Laser ausgesandte Licht wird vorteilhafterweise wenigstens einmal an der Umfangswandung an dem dafür vorgesehenen Reflexionsabschnitt reflektiert und durchläuft somit die Durchströmkammer entlang unterschiedlicher Teilpfade

Als besonders vorteilhaft hat sich dabei herausgestellt, wenn das von dem Laser ausgesandte Licht mehrfach von einem Reflexionsabschnitt der Umfangswandung reflektiert wird, bevor es auf den Detektor trifft. Auf diese Weise lässt sich die Wegstrecke, die das Licht innerhalb der Durchströmkammer zurücklegt, nahezu beliebig einstellen und auf den gewünschten Wert vergrößern. Dieser kann insbesondere in Abhängigkeit der zu erwartenden und zu detektierenden Konzentration des chemischen Stoffes eingestellt werden. Je geringer die erwartete und zu detektierende Konzentration des chemischen Stoffes ist, desto länger sollte die Wegstrecke gewählt werden, die das Laserlicht im Innern der Durchströmkammer zurücklegen muss, bevor es auf den Detektor trifft. Dadurch wird sichergestellt, dass auch bei kleinen und kleinsten Konzentrationen des chemischen Stoffes genug Moleküle vom Laserlicht getroffen werden, um zu einer messbaren und detektierbaren Abnahme der Intensität des eingestrahlten Laserlichtes zu führen. Der tatsächlichen Wahl des vom Laserlicht im Innern der Durchströmkammer zurückgelegten Weges sind dabei nahezu keine Grenzen gesetzt. Die Teilpfade können in unterschiedlichen oder der gleichen Ebene liegen und sich beispielsweise kreuzen. Natürlich sind auch Pfade, die sich nicht kreuzen, vorstellbar.

Durch die Anzahl der vorgesehenen Reflexionen des vom Laser ausgesandten Lichtes im Innern der Durchströmkammer kann folglich die zurückgelegte Weglänge des Lichtes im Innern der Durchströmkammer nahezu beliebig eingestellt werden. Dies bedeutet, dass dadurch nahezu keinerlei Beschränkungen an die Größe der Durchflusskammer mehr vorhanden sind. Diese kann daher baulich klein ausgeführt werden und beispielsweise eine Länge von wenigen Millimetern, beispielsweise 4 mm, aufweisen. Mit einer Durchströmkammer, die quaderförmig aufgebaut ist und beispielsweise Abmessungen von 4 mm x 2 mm x 2 mm aufweist, lassen sich bei geeigneter Wahl des Weges, den das Licht im Innern der Durchströmkammer zurücklegen muss, auch kleine und kleinste Konzentrationen des chemischen Stoffes nachweisen. Diese kleine Ausgestaltung der Durchströmkammer führt dazu, dass die gesamte Vorrichtung baulich klein ausgebildet und so auch an unzugänglichen oder räumlich begrenzten Stellen, beispielsweise in oder an einem Leitungssystem für Trinkwasser, befestigt werden kann.

Dabei wird die Vorrichtung beispielsweise in Form eines Bypasses an einer Rohrleitung befestigt, durch die die Flüssigkeit mit dem darin gelösten chemischen Stoff geleitet wird. Auf diese Weise wird nun ein geringer Teil der Flüssigkeit durch die Durchströmkammer geleitet und der elektromagnetischen Strahlung des Lasers ausgesetzt. Davon ausgehend, dass sich im Innern der Flüssigkeit eine homogene Verteilung des chemischen Stoffes befindet, ist dieses Vorgehen zur Bestimmung der Konzentration in der Flüssigkeit ausreichend.

Vorteilhafterweise verfügt die Vorrichtung über wenigstens einen Strahlteiler zum Aufteilen des von dem Laser ausgesandten Lichtes in wenigstens zwei Teilstrahlen, die entlang der wenigstens zwei Teilpfade durch die Durchströmkammer geleitet werden. Dadurch lassen sich die unterschiedlichen Teilpfade, die das Licht im Innern der Durchströmkammer durchlaufen muss realisieren, ohne dass das Licht an der Umfangswandung der Durchströmkammer oder an einem sonstigen Reflektorelement reflektiert wird. Dies kann für bestimmte Anforderungen sinnvoll sein, da dadurch beispielsweise keine reflektierende Oberfläche mit der Flüssigkeit und dem darin gelösten chemischen Stoff in Berührung kommt. Natürlich lassen sich beide Prinzipien miteinander kombinieren, sodass in einer Strahlteilvorrichtung das von dem Laser ausgesandte Licht in mehrere Teilstrahlen aufgeteilt wird, von denen anschließend wenigstens einer oder alle, bevorzugt alle bis auf einen, im Innern der Durchströmkammer reflektiert werden und jeder für sich die Durchströmkammer entlang mehrerer unterschiedlicher Pfade durchlaufen. Nachdem die einzelnen Teilstrahlen die Durchströmkammer wieder verlassen haben, werden sie beispielsweise zusammengeführt und gemeinsam auf den Detektor geleitet, der die Gesamtintensität des Lichtes misst. Naturgemäß können auch die einzelnen Teilstrahlen separat voneinander einem Detektor zugeführt werden und die einzelnen auf diese Weise ermittelten Intensitätsergebnisse zu einem Gesamtergebnis kombiniert werden.

Vorteilhafterweise wird zumindest einer der Teilstrahlen nicht durch die Durchströmkammer geleitet. Er dient als Referenzstrahl und wird vorteilhafterweise direkt auf einen entweder separat dafür vorgesehenen Detektor oder auf den ohnehin vorhandenen Detektor geleitet. Damit kann die eingestrahlte Intensität des Laserlichtes als Referenzwert gemessen und gleichzeitig überwacht werden. Dadurch wird es möglich, Fehlfunktionen der Vorrichtung zu verhindern. Detektiert der Detektor beispielsweise eine starke Abnahme der Intensität des bei ihm eintreffenden Laserlichtes, kann dies einerseits eine besonders hohe Konzentration des in der Flüssigkeit gelösten chemischen Stoffes und damit eine große Absorption des Laserlichtes in der Flüssigkeit bedeuten. Dieses Detektionsergebnis kann jedoch beispielsweise auch durch eine Abnahme der eingestrahlten Laserlichtintensität, beispielsweise durch eine Fehlfunktion oder einen Alterungsprozess des Lasers, hervorgerufen werden. Dieses lässt sich durch einen separaten Teilstrahl, der nicht durch die Durchströmkammer geführt wird, ermitteln, so dass hier unzutreffende Interpretationen der Messergebnisse verhindert werden.

In einer besonders bevorzugten Ausgestaltung verfügt die Vorrichtung über wenigstens zwei Laser zum Aussenden von Licht der Absorptionswellenlänge. Auch mit dieser Ausgestaltung lässt sich auf besonders einfache Weise erreichen, dass das Licht der Laser auf zwei unterschiedlichen Pfaden durch die Durchströmkammer geleitet wird, indem das Licht der beiden Laser getrennt voneinander durch ein Eintrittsfenster in die Durchströmkammer hinein- und durch ein Austrittsfenster aus der Durchströmkammer herausgeleitet wird. Auch dies lässt sich naturgemäß mit den bereits beschriebenen Prinzipien kombinieren. So lässt sich beispielsweise auch das von beiden Lasern ausgesandte Licht durch einen Strahlteiler teilen und/oder über Spiegel im Innern der Durchströmkammer reflektieren, sodass hier die Weglänge, die das Laserlicht im Innern der Durchströmkammer zurücklegt, ebenfalls frei einstellbar ist. Auch auf diese Weise lassen sich beispielsweise Alterungseffekte oder Fehlfunktionen eines der beiden Laser von einer erhöhten Konzentration des zu detektierenden chemischen Stoffes in der Flüssigkeit unterscheiden, indem beispielsweise die Intensität des auf dem Detektor auftreffenden Laserlichtes für beide Laser separat voneinander gemessen und so miteinander verglichen wird.

Als besonders vorteilhaft hat sich herausgestellt, wenn einer der Teilstrahlen, der beispielsweise von einem der beiden Laser ausgesandt wird, zwar durch die Durchströmkammer geführt wird, dort jedoch nicht mit der Flüssigkeit und dem darin gelösten chemischen Stoff in Kontakt kommt. Dies kann beispielsweise durch einen Kanal oder einen Wellenleiter geschehen. Auf diese Weise kann sichergestellt werden, dass beispielsweise Abschattungseffekte des Eintritts- und/oder Austrittsfensters nicht mit einer erhöhten Konzentration des zu detektierenden chemischen Stoffes verwechselt werden können. Detektiert der Detektor eine starke Abnahme der bei ihm eintreffenden Laserlichtintensität, kann dies neben der erhöhten Konzentration des zu detektierenden chemischen Stoffes auch an einer Abschattung oder Eintrübung des Eintritts- und/oder Austrittsfensters liegen, durch das das Laserlicht in die Durchströmkammer hinein- bzw. aus der Durchströmkammer herausgeführt wird. Dies lässt sich durch einen separaten Teilstrahl unterscheiden, der zwar durch die Eintritts- und Austrittsfenster geführt wird, jedoch nicht mit der Flüssigkeit und den darin gelösten Stoff in Kontakt kommt.

Gemäß der Erfindung senden die beiden Laser Licht unterschiedlicher Wellenlänge aus. Damit ist es möglich, die Anzahl der unterscheidbaren gelösten chemischen Stoffe zu erhöhen. Um mit der hier beschriebenen Vorrichtung den gelösten chemischen Stoff zweifelsfrei identifizieren zu können, ist es nötig, dass der chemische Stoff Licht der Absorptionswellenlänge absorbiert und kein anderer in Frage kommender chemischer Stoff dies ebenfalls tut. Nur so lässt sich der zu detektierende chemische Stoff eindeutig identifizieren. Existieren jedoch beispielsweise mehrere, beispielsweise drei oder vier, chemische Stoffe, die Licht der Absorptionswellenlänge absorbieren, ist es äußerst unwahrscheinlich, dass einige oder alle dieser Stoffe auch bei einer zweiten Absorptionswellenlänge, die von der ersten Absorptionswellenlänge verschieden ist, Licht absorbieren. Wird nun der zweite Laser auf diese Wellenlänge eingestellt, lassen sich die durch nur eine Absorptionslinie nicht unterscheidbaren chemischen Stoffe voneinander trennen.

Wie bereits dargelegt, ist es erfindungsgemäß vorgesehen, wenn der zweite Laser Licht einer zweiten Wellenlänge aussendet, das von dem zu detektierenden chemischen Stoff nicht absorbiert wird. Auf diese Weise kann es für die Bestimmung von Streu- und Absorptionsmechanismen verwendet werden, die nicht vom chemischen Stoff, den es zu detektieren gilt, abhängig sind. Erfindungsgemäß wird das Licht der beiden Laser entlang der gleichen Pfade oder entlang gleich langer Pfade durch die Durchströmkammer geleitet, bevor es auf den Detektor trifft. Auf diese Weise ist sichergestellt, dass die durch Verunreinigungen und sonstige Störungen auftretenden Streu- und Absorptionsmechanismen und -prozesse das Licht beider Laser gleich stark beeinflussen. Wird das Licht der beiden Laser entlang der gleichen Pfade durch die Durchströmkammer geleitet, können auch Inhomogenitäten in der Verteilung der Störstellen, beispielsweise der Verteilung von Blasen oder Schwebstoffen in der Flüssigkeit, berücksichtigt werden und tragen nicht mehr zu einer Verfälschung des Messergebnisses bei. Der Detektor, der das Licht zweier unterschiedlicher Laser mit unterschiedlicher Wellenlänge detektieren muss, kann auch in Form von zwei separaten Detektorelementen ausgebildet sein, die gegebenenfalls an unterschiedlichen Positionen angeordnet sind. Natürlich kann auch ein Detektor verwendet werden, der in der Lage ist, gleichzeitig das Licht unterschiedlicher Wellenlängen zu detektieren und die jeweiligen Intensitäten zu bestimmen. Dies gilt auch für den Fall, dass mehrere Laser verwendet werden, die Licht unterschiedlicher Absorptionswellenlängen aussenden.

Vorzugsweise verfügt die Durchströmkammer über wenigstens ein Fenster, durch das das von dem Laser ausgesandte Licht in die Durchströmkammer eindringen und die Durchströmkammer verlassen kann, wobei das wenigstens eine Fenster vorzugsweise aus einem Glas besteht. Das Fenster kann beispielsweise durch eine Beschichtung oder durch einen Klebstoff an der Umfangswandung der Durchströmkammer befestigt sein. Natürlich können auch mehrere Fenster, insbesondere ein Eintrittsfenster und ein Austrittsfenster vorhanden sein, sodass das von dem Laser ausgesandte Licht an unterschiedlichen Positionen in die Durchströmkammer eintreten bzw. aus ihr austreten kann.

Ein erfindungsgemäßes Verfahren zum Herstellen einer Durchströmkammer für eine hier beschriebene Vorrichtung zeichnet sich durch folgende Schritte aus:
a) Herstellen einer Vertiefung in einem Werkstück,
b) Positionieren wenigstens eines Umfangswandungselementes in der Vertiefung, wobei das Umfangswandungselement ein in einem Beschichtungsverfahren hergestelltes, zumindest in einem Reflexionsabschnitt verspiegeltes Substrat ist,
c) Verschließen der Vertiefung mit einem Deckelelement.

Dies ist nur eine Möglichkeit, eine Durchströmkammer für eine hier beschriebene Vorrichtung herzustellen. Das Umfangswandungselement wird dabei insbesondere als ein Substrat hergestellt, das außerhalb der Vertiefung des Werkstückes mit einer Verspiegelung, die beispielsweise in einem Dünnschichtverfahren aufgebracht werden kann, versehen wird. Anschließend wird das Umfangswandungselement in der Vertiefung des Werkstückes positioniert. Diese Vertiefung kann beispielsweise durch Fräsen oder Ätzen aus dem Werkstück entfernt werden und ist vorteilhafterweise in ihrer räumlichen Ausdehnung etwas größer als die spätere Durchströmkammer. Das Umfangswandungselement, das in der Vertiefung angeordnet wird, bildet zumindest einen Teil der Umfangswandung und verfügt über den Reflexionsabschnitt, der für das Reflektieren des vom Laser eingestrahlten Laserlichtes notwendig ist.

Mit dem erfindungsgemäßen Verfahren kann zunächst die Vertiefung hergestellt werden, wobei die einzuhaltenden Fertigungstoleranzen relativ großzügig bemessen sein können, da die Umfangswandungselemente, die exakt aufeinander ausgerichtet sein müssen, später eingesetzt werden. Daher kann die Vertiefung schnell und kostengünstig hergestellt werden. Separat dazu wird das Substrat im Bereich des Reflexionsabschnittes verspiegelt und anschließend in Form des Umfangswandungselementes in die Vertiefung eingesetzt. Dabei kann es exakt in die gewünschte Position und Ausrichtung gebracht werden. Anschließend wird die Vertiefung mit einem Deckelelement verschlossen, das ein weiteres Teil der Umfangswandung bildet. Damit ist die Durchströmöffnung insoweit geschlossen, dass nur noch eine Einlass- und eine Auslassöffnung vorhanden sind. Das Umfangswandlungselement kann zudem ein Eintritts- und/oder Austrittsfenster aufweisen, das beispielsweise als separates Glasbauteil an dem Substrat befestigt wird. Hierzu können alle aus dem Stand der Technik bekannten gängigen Verfahren verwendet werden.

Als besonders vorteilhaft hat sich gezeigt, wenn zwei Umfangswandungselemente in der Vertiefung einander gegenüberliegend positioniert werden. Die Ausrichtung dieser beiden Elemente, die vorteilhafterweise jeweils wenigstens einen Reflexionsabschnitt aufweisen, kann exakt in die gewünschte und benötigte Position geschehen. Die Herstellung einer derartigen Durchströmkammer ist somit schnell, einfach und damit kostengünstig möglich.

Als Umfangswandungselement und insbesondere als Reflexionsabschnitt bietet sich beispielsweise ein mit Siliziumdioxid besputtertes geläpptes Aluminiumreflexionselement an. Dazu kann ein Aluminiumblock mit dünnem Siliziumdioxid beschichtet, insbesondere besputtert werden, um eine Lichtstrahlbrechung zu vermeiden. Ein Deckelelement wird anschließend beispielsweise mit Silikon auf die Vertiefung, in der sich das Umfangswandungselement befindet, aufgeklebt.

Bei einer besonders bevorzugten Variante kann eine untere Bodenplatte der Durchströmkammer beispielsweise aus einem Glas hergestellt werden, auf das man die mit Siliziumdioxid besputterten Alublöcke und die ggf. vorhandenen Eintritts- und/oder Austrittsfenster aufklebt. Daran können beispielsweise mit Silikon die Einlassöffnung und/oder die Auslassöffnung für die Flüssigkeit geklebt werden. Anschließend wird der Deckel aufgesetzt und die gesamte Konstruktion beispielsweise mit Silikon abgedichtet.

Alternativ ist auch eine Beschichtung aus Mangandifluorid denkbar. Beides sind jedoch nur beispielhafte Ausgestaltungen, die je nach verwendeter Flüssigkeit und zu detektierendem gelösten chemischen Stoff durch geeignetere Kombinationen ersetzt werden können.

In einem alternativen Verfahren zum Herstellen der Durchströmkammer für eine hier beschriebene Vorrichtung von einem Master oder Masterbauteil abgenommen werden, das beispielsweise durch spanende Bearbeitung eines Materialblockes hergestellt werden kann. Dieser kann beispielsweise mit einem Formmaterial, beispielsweise Silikon, umgossen werden, das nach dem Aushärten von dem Master oder Masterbauteil entfernt wird und so die Gussform bildet. Natürlich sind auch andere Möglichkeiten denkbar, eine entsprechende Gussform herzustellen. Nach dem Bereitstellen der Gussform wird diese Gussform mit einem Kammermaterial ausgegossen. Das Kammermaterial ist dabei das Material, aus dem die herzustellende Durchströmkammer hergestellt werden soll. Das Kammermaterial härtet in der Gussform aus. Dies kann durch Abkühlen geschehen, so dass gegebenenfalls lediglich gewartet werden muss, bis das gegebenenfalls warme oder heiße Kammermaterial abkühlt. Natürlich ist es auch möglich, eine Kühlung zu verwenden und das Kammermaterial unter Verwendung eines festgelegten Temperaturprofils als Funktion der Zeit abkühlen zu lassen und so beispielsweise bestimmte Kristallstrukturen oder andere Erstarrungsformen zu bevorzugen oder zu gewährleisten.

Nach dem Aushärten des Kammermaterials wird das so ausgehärtete Material aus der Gussform entfernt. Dabei sind die Gussform und das Material so gewählt, dass das entfernte ausgehärtete Kammermaterial zumindest einen Teil der Durchströmkammer bildet. Dieser Teil beinhaltet insbesondere zumindest einen Teil der Umfangswandung, der den wenigstens einen Reflexionsabschnitt aufweist. Auf diese Weise ist es möglich, die Reflexionsabschnitte in einem leicht durchzuführenden und gut zu kontrollierenden Verfahren in optimaler Weise relativ zueinander und zu einer gegebenenfalls zu einem späteren Zeitpunkt noch herzustellenden Einlass- und Auslassöffnung anzuordnen. Natürlich können Einlassöffnung und/oder Auslassöffnung auch bereits durch eine entsprechende Form der Gussform vorgesehen sein, so dass sie durch den Gussvorgang bereits erzeugt werden. Die Reflexionsabschnitte können auf diese Weise vorzugsweise mit einer Oberflächenrauigkeit erzeugt werden, die kleiner ist als die Wellenlänge des Lichtes, das an den Reflexionsabschnitten reflektiert werden soll. Dadurch, dass sie mit dem Hauptteil der Durchströmkammer oder der gesamten Durchströmkammer einstückig ausgebildet werden, ist eine Positionierung der einzelnen Reflexionsabschnitte problemlos möglich.

Ein Einkleben und Ausrichten der Spiegel, das vergleichsweise kostenintensiv und fehleranfällig ist, ist auf diese Weise nicht mehr nötig.

Vorteilhafterweise verfügt die Vorrichtung über eine Temperierungseinrichtung, mit der die Temperatur der sich in der Durchströmkammer befindenden Flüssigkeit erhöht und/oder gesenkt werden kann, um eine konstante Temperatur innerhalb der Durchströmkammer zu gewährleisten. In einer bevorzugten Ausgestaltung können die Reflexionsabschnitte als Heizelemente verwendet werden. In Durchströmrichtung vor der Durchströmkammer befindet sich vorteilhafterweise wenigstens ein Temperatursensor, mit dem die Temperatur des flüssigen Mediums bestimmt wird. Der so bestimmte Wert kann verwendet werden, um die Temperiereinrichtung zu steuern und die Temperatur der Flüssigkeit je nach Bedarf zu erhöhen oder abzusenken.

In einer vorteilhaften Ausgestaltung ist zudem eine Referenzmessung möglich. Das Licht, das von den beiden Lasern ausgesandt wird, wird durch eine zweite Durchströmkammer geleitet, die vorteilhafterweise identisch zur Durchströmkammer der Vorrichtung ausgebildet ist. Diese zweite Durchströmkammer wird jedoch von einer Flüssigkeit durchströmt, bei der die Konzentration des nachzuweisenden chemischen Stoffes bekannt ist. Auf diese Weise kann eine Referenzmessung durchgeführt werden und so die Qualität der eigentlichen Messung weiter verbessert werden.

Mit Hilfe der beiliegenden Figuren wird nachfolgend ein Ausführungsbeispiel der vorliegenden Erfindung näher erläutert. Es zeigt:
- Figur 1: - die schematische Draufsicht auf eine Vorrichtung gemäß einem ersten Ausführungsbeispiel der vorliegenden Erfindung;
- Figur 2: - die schematische Ansicht eines Strahlteilers.
- Figur 3: - die schematische Draufsicht auf eine Durchströmkammer einer Vorrichtung gemäß einem weiteren Ausführungsbeispiel der vorliegenden Erfindung und
- Figur 4: - die schematische Darstellung einer Vorrichtung gemäß einem weiteren Ausführungsbeispiel der vorliegenden Erfindung.

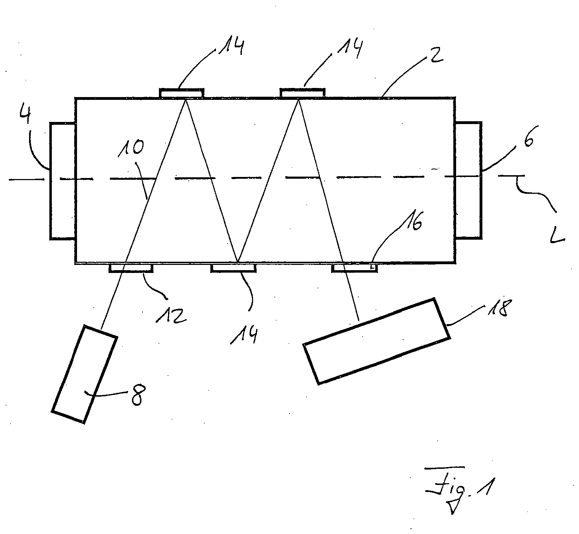

Figur 1 zeigt eine Vorrichtung gemäß einem ersten Ausführungsbeispiel der vorliegenden Erfindung. Sie verfügt über eine Durchströmkammer 2, die eine Einlassöffnung 4 und eine Auslassöffnung 6 aufweist, wobei die Einlassöffnung 4 und die Auslassöffnung 6 im in Figur 1 gezeigten Ausführungsbeispiel in Form eines Flansches ausgebildet sind. Durch die Durchströmkammer 2 fließt folglich eine Flüssigkeit im in Figur 1 gezeigten Ausführungsbeispiel von links nach rechts.

Die Vorrichtung verfügt zudem über einen Laser 8, der Licht 10 aussendet, das eine Wellenlänge aufweist, die der Absorptionswellenlänge des gelösten chemischen Stoffes entspricht. Das Licht 10 tritt durch ein Eintrittsfenster 12 in die Durchströmkammer 2 ein und wird an drei dafür vorgesehenen Reflexionsabschnitten 14 reflektiert. Anschließend tritt es durch ein Austrittsfenster 16 aus der Durchströmkammer 2 aus und fällt auf einen Detektor 18, der die Intensität des einfallenden Lichtes 10 misst.

Aus dem Intensitätsverlust des Lichtes 10 vom Laser 8 bis zum Detektor 18 lässt sich die Konzentration eines in der Flüssigkeit gelösten chemischen Stoffes bestimmen. Da das Licht 10 im Innern der Durchströmkammer 2 im gezeigten Ausführungsbeispiel dreimal an den Reflexionsabschnitten 14 reflektiert wird, ist die Wegstrecke, die das Licht 10 im Innern der Durchströmkammer 2 zurücklegt, deutlich größer als eine räumliche Ausdehnung der Durchströmkammer 2. Auf diese Weise ist es möglich, die Durchströmkammer 2 und damit die gesamte Vorrichtung räumlich klein auszubilden.

Die Durchströmkammer 2 verfügt über eine Längserstreckung in Längsrichtung L, die im gezeigten Ausführungsbeispiel auf der Strömungsrichtung der Flüssigkeit von der Einlassöffnung 4 zur Auslassöffnung 6 entspricht. Über eine Wahl des Winkels, den das Licht 10 im Innern der Durchströmkammer 2 mit dieser Längsrichtung L einnimmt, lässt sich auch die Anzahl der Reflexionen an den Reflexionsabschnitten 14 einstellen. Wird der Winkel zwischen dem einfallenden Licht 10 und der Längsrichtung L vergrößert, wird er also 90° angenähert, kann das Licht 10 an einer größeren Anzahl dafür jedoch anzuordnender Reflexionsabschnitte 14 reflektiert werden, sodass die Wegstrecke, die das Licht 10 im Innern der Durchströmkammer 2 zurücklegt, zunimmt. Damit wird die Empfindlichkeit der Vorrichtung 1 erhöht.

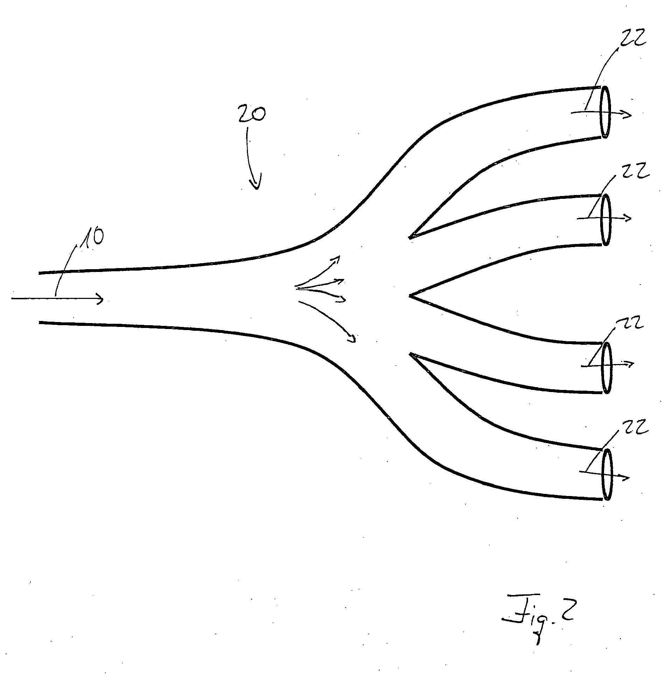

Alternativ oder zusätzlich zu der in Figur 1 gezeigten Vorrichtung kann das vom Laser 8 ausgesandte Licht 10 durch einen Strahlteiler 20, wie er in Figur 2 dargestellt ist, gesandt werden. Das Licht 10 tritt von links in den Strahlteiler 20 ein und wird in vier Teilstrahlen 22 aufgeteilt. Natürlich sind auch Strahlteiler 20 vorstellbar, die mehr oder weniger als vier Teilstrahlen 22 erzeugen. Die Teilstrahlen 22 können analog zu dem in Figur 1 gezeigten Ausführungsbeispiel durch ein Eintrittsfenster 12 in die Durchströmkammer 2 geleitet werden und dort beispielsweise an dafür vorhandenen Reflexionsabschnitten 14 reflektiert werden. Zwischen dem Austrittsfenster 16 und dem Detektor 18 ist ein weiterer Strahlteiler 20 angeordnet, der jedoch in umgekehrter Richtung vom Licht durchlaufen wird, sodass die unterschiedlichen auftreffenden Teilstrahlen 22 zu einem Lichtstrahl gebündelt und anschließend von dem Detektor 18 detektiert werden. Alternativ dazu lassen sich natürlich auch die einzelnen Teilstrahlen 22 auf dem Detektor 18 separat detektieren, wobei das Ergebnis anschließend zu einem Gesamtergebnis aufaddiert wird.

Insbesondere für den Fall, dass mehrere Teilstrahlen 22 in die Durchströmkammer 2 eingeleitet werden, ist es oftmals nicht nötig, separate Reflexionsabschnitte 14 zu verwenden, um die Teilstrahlen 22 im Innern der Durchströmkammer 2 zu reflektieren. Vielmehr können die Teilstrahlen 22, nachdem sie die Durchströmkammer 2 einmalig durchlaufen haben, durch das Austrittsfenster 16 die Durchströmkammer 2 verlassen. Jeder der Teilstrahlen 22 bildet dann einen der unterschiedlichen Pfade. Auch in diesem Fall wird die Weglänge, die das Licht im Innern der Durchströmkammer 2 zurücklegt, erhöht. Dadurch besteht für das Licht 10 die Chance, mehr Moleküle des nachzuweisenden chemischen Stoffes in der Flüssigkeit zu treffen und so zu einem detektierbaren Signal, also zu einer messbaren Verringerung der Intensität zu führen. Dadurch lassen sich auch kleinere und kleinste Konzentrationen des chemischen Stoffes nachweisen.

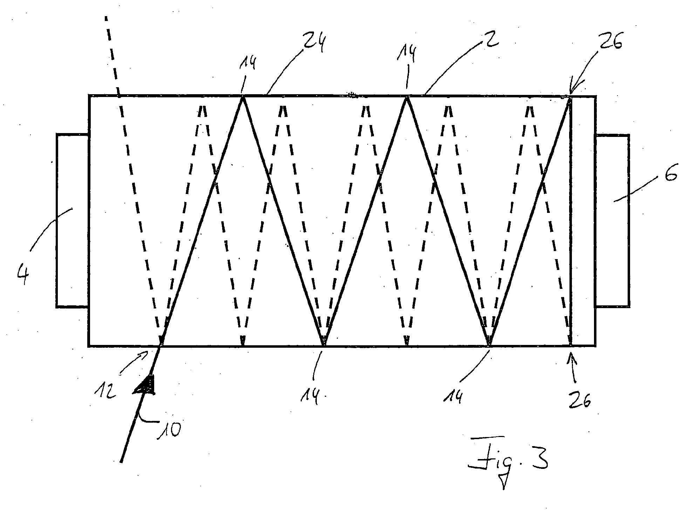

Figur 3 zeigt eine schematische Darstellung einer weiteren Vorrichtung. Man erkennt die Durchströmkammer 2 mit Einlassöffnung 4 und Auslassöffnung 6. Das Licht 10, das durch das Eintrittsfenster 12, das im in Figur 3 gezeigten Ausführungsbeispiel in eine Umfangswandung 24 der Durchströmkammer 2 integriert ist, in die Durchströmkammer 2 eindringt, wird von der Umfangswandung 24 reflektiert. Im in Figur 3 gezeigten Ausführungsbeispiel ist vorteilhafterweise die gesamte Umfangswandung 24 an der Innenseite verspiegelt. Während das Licht 10 sich nach den ersten vier Reflexionsabschnitten 14 noch immer in der gleichen Ebene wie das Eintrittslicht 10 befindet, wird es an Umlenkpunkten 26 in eine zweite Ebene, die im in Figur 3 gezeigten Ausführungsbeispiel unterhalb der ersten Ebene liegt, umgelenkt. In diesem Bereich wird das Licht 10 durch eine gestrichelte Linie dargestellt, wodurch lediglich dargestellt werden soll, dass das Licht 10 nun in einer Richtung senkrecht zur Zeichenebene verschoben verläuft. Man erkennt, dass die Reflexionswinkel in dieser Ebene kleiner sind, sodass eine unterschiedliche Anzahl von Durchquerungen durch das Licht 10 vorgenommen werden muss.

Figur 3 dient lediglich als Beispiel für die nahezu unbegrenzte Vielfalt der möglichen Strahlengänge im Innern der Durchströmkammer 2. Sowohl der Neigungswinkel relativ zur Längsrichtung L als auch die Anzahl der verschiedenen Ebenen oder die sonstige Strahlführung des Lichts 10 im Innern der Durchströmkammer 2 ist insbesondere bestimmt durch die benötigte Weglänge, die das Licht 10 im Innern der Durchströmkammer 20 zurücklegt. Diese sollte auf die erwartete Konzentration des zu detektierenden chemischen Stoffes angepasst werden.

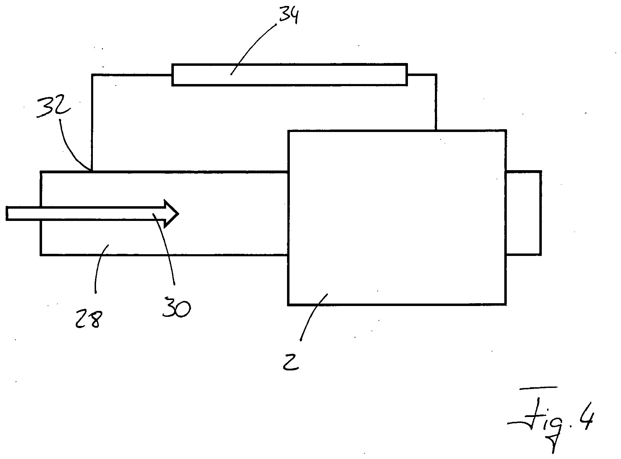

Figur 4 zeigt schematisch eine Durchströmkammer 2 mit einer Zuleitung 28. Diese wird entlang des Pfeils 30 von Flüssigkeit durchströmt, die durch eine nicht gezeigte Einlassöffnung in die Durchströmkammer 2 eindringt. An der Zuleitung 28 befindet sich ein Temperatursensor 32, mit dem die Temperatur der Flüssigkeit in der Zuleitung 28 bestimmt werden kann. Der so bestimmte Wert wird einer elektronischen Steuerung 34 zugeleitet, die mit nicht dargestellten Heiz- und/oder Kühlelementen, mithin also einer Temperiereinrichtung im Innern der Durchströmkammer 2 verbunden ist. Auf diese Weise kann in der Durchströmkammer 2 eine konstante Temperatur gewährleistet werden.

### Bezugszeichenliste

- L: Längsrichtung
- 2: Durchströmkammer
- 4: Einlassöffnung
- 6: Auslassöffnung
- 8: Laser
- 10: Licht
- 12: Eintrittsfenster
- 14: Reflexionsabschnitt
- 16: Austrittsfenster
- 18: Detektor
- 20: Strahlteiler
- 22: Teilstrahl
- 24: Umfangswandung
- 26: Umlenkpunkt
- 28: Zuleitung
- 30: Pfeil
- 32: Temperatursensor
- 34: elektronische Steuerung

## Patentansprüche

1. Vorrichtung zum Bestimmen einer Konzentration eines in einer Flüssigkeit gelösten chemischen Stoffes, der Licht (10) einer Absorptionswellenlänge absorbiert, wobei die Vorrichtung wenigstens eine Durchströmkammer (2) mit
wenigstens einer Einlassöffnung (4),
wenigstens einer Auslassöffnung (6) und
wenigstens einer Umfangswandung (24), wenigstens einen ersten Laser (8) zum Aussenden von Licht (10) der Absorptionswellenlänge und
wenigstens einen Detektor (18) zum Detektieren des ausgesandten Lichtes (10) aufweist,
wobei der erste Laser (8) und der Detektor (18) derart angeordnet sind, dass das von dem ersten Laser (8) ausgesandte Licht (10) entlang eines Pfads durch die Durchströmkammer (2) geleitet wird, welcher Pfad aus wenigstens zwei unterschiedlichen Teilpfaden besteht, bevor es auf den Detektor (18) trifft, wobei die Vorrichtung einen zweiten Laser (8) aufweist, der Licht einer zweiten Wellenlänge aussendet, welche unterschiedlich zur Wellenlänge des vom ersten Laser ausgesandten Lichts ist, wobei Licht der zweiten Wellenlänge von dem chemischen Stoff nicht absorbiert wird und das Licht (10) der beiden ersten und zweiten Laser (8) entlang des dergleichen Pfads oder entlang unterschiedlicher, aber gleich langer Pfade durch die Durchströmkammer (2) geleitet wird, bevor es auf den Detektor (18) trifft, wobei die wenigstens zwei unterschiedlichen Teilpfade in unterschiedlichen Ebenen liegen.

2. Vorrichtung nach Anspruch 1, **dadurch gekennzeichnet, dass** die Umfangswandung (24) zumindest einen Reflexionsabschnitt (14) aufweist, der so angeordnet ist, dass von dem Laser (8) ausgesandtes Licht (10) an dem Reflexionsabschnitt (14) von einem ersten Pfad auf einen zweiten Pfad umgelenkt wird.

3. Vorrichtung nach Anspruch 2, **dadurch gekennzeichnet, dass** das von dem Laser (8) ausgesandte Licht (10) mehrfach von einem Reflexionsabschnitt (14) der Umfangswandung (24) reflektiert wird, bevor es auf den Detektor (18) trifft.

4. Vorrichtung nach einem der vorsehenden Ansprüche, **gekennzeichnet durch** wenigstens einen Strahlteiler (20) zum Aufteilen des von dem Laser (8) ausgesandten Lichtes (10) in wenigstens zwei Teilstrahlen (22), von denen wenigstens einer entlang der wenigstens zwei Pfade durch die Durchströmkammer (2) geleitet werden.

5. Vorrichtung nach Anspruch 4, **dadurch gekennzeichnet, dass** zumindest einer der Teilstrahlen (22) nicht durch die Durchströmkammer (2) geleitet wird.

6. Vorrichtung nach einem der vorstehenden Ansprüche, **dadurch gekennzeichnet, dass** die Durchströmkammer (2) wenigstens ein Fenster (12, 16) aufweist, durch das das von dem Laser (8) ausgesandte Licht (10) in die Durchströmkammer (2) eindringen und die Durchströmkammer (2) verlassen kann, wobei das wenigstens eine Fenster (12, 16) vorzugsweise aus einem Glas besteht.

## Claims

1. A device for determining a concentration of a chemical substance dissolved in a fluid, said substance absorbing light (10) of an absorption wavelength, wherein the device comprises
at least one through-flow chamber (2) with
at least one inlet opening (4),
at least one outlet opening (6) and
at least one peripheral wall (24),
at least a first laser (8) for emitting light (10) of the absorption wavelength, and at least one detector (18) for detecting the emitted light (10),
wherein the first laser (8) and the detector (18) are arranged such that the light emitted by the first laser (8) is guided along a path through the through-flow chamber (2), said path being composed of at least two different partial paths, before reaching the detector (18),
wherein the device comprises a second laser (8) that emits light of a second wavelength which is different to the wavelength of the light emitted by the first laser,
wherein light of the second wavelength is not absorbed by the chemical substance and the light (10) of both the first and second laser (8) is guided along the same path or along different paths of equal length through the through-flow chamber (2) before reaching the detector (18), wherein the at least two different partial paths lie in different planes.

2. The device according to claim 1, **characterised in that** the peripheral wall (24) features at least one reflective section (14) that is arranged in such a way that light (10) emitted by the laser (8) is diverted on the reflective section (14) from a first path to a second path.

3. The device according to claim 2, **characterised in that** the light (10) emitted by the laser (8) is reflected several times by a reflective section (14) of the peripheral wall (24) before it reaches the detector (18).

4. The device according to one of the preceding claims, **characterised by** at least one beam splitter (20) for splitting the light (10) emitted by the laser (8) into at least two partial beams (22), of which at least one is guided along the at least two paths through the through-flow chamber (2).

5. The device according to claim 4, **characterised in that** at least one of the partial beams (22) is not guided through the through-flow chamber (2).

6. The device according to one of the preceding claims, **characterised in that** the through-flow chamber (2) has at least one window (12, 16) through which the light (10) emitted by the laser (8) can enter and leave the through-flow chamber (2), wherein the at least one window (12, 16) is preferably made of glass.

## Revendications

1. Dispositif pour déterminer une concentration d'une substance chimique qui est dissoute dans un liquide et qui absorbe de la lumière (10) d'une longueur d'onde d'absorption, ledit dispositif comprenant au moins une chambre d'écoulement (2) ayant
au moins un orifice d'admission (4),
au moins un orifice de sortie (6), et
au moins une paroi périphérique (24),
au moins un premier laser (8) pour émettre de la lumière (10) de la longueur d'onde d'absorption, et
au moins un détecteur (18) pour détecter la lumière émise (10),
dans lequel
le premier laser (8) et le détecteur (18) sont disposés de telle sorte que la lumière (10) émise par le premier laser (8) est guidée le long d'un chemin à travers la chambre d'écoulement (2), ledit chemin étant constitué de deux chemins partiels différents, avant de tomber sur le détecteur (18),
le dispositif comprend un deuxième laser (8) qui émet de la lumière d'une deuxième longueur d'onde qui diffère de la longueur d'onde de la lumière émise par le premier laser,
la lumière de la deuxième longueur d'onde n'est pas absorbée par la substance chimique, et
la lumière (10) des deux premier et deuxième lasers (8) est guidée à travers la chambre d'écoulement (2) le long du même chemin ou le long de chemins différents, ayant la même longueur, avant de tomber sur le détecteur (18), lesdits au moins deux chemins partiels différents se situant dans des plans différents.

2. Dispositif selon la revendication 1,
**caractérisé en ce que** la paroi périphérique (24) comprend au moins une portion de réflexion (14) disposée de telle sorte que la lumière (10) émise par le laser (8) est défléchie au niveau de la portion de réflexion (14) pour passer d'un premier chemin à un deuxième chemin.

3. Dispositif selon la revendication 2,
**caractérisé en ce que** la lumière (10) émise par le laser (8) est réfléchie plusieurs fois par une portion de réflexion (14) de la paroi périphérique (24), avant de tomber sur le détecteur (18).

4. Dispositif selon l'une des revendications précédentes,
**caractérisé par** au moins un diviseur de faisceau (20) pour diviser la lumière (10) émise par le laser (8) en au moins deux faisceaux partiels (22), dont l'un au moins est guidé à travers la chambre d'écoulement (2) le long desdits au moins deux chemins.

5. Dispositif selon la revendication 4,
**caractérisé en ce que** l'un au moins des faisceaux partiels (22) n'est pas guidé à travers la chambre d'écoulement (2).

6. Dispositif selon l'une des revendications précédentes,
**caractérisé en ce que** la chambre d'écoulement (2) comprend au moins une fenêtre (12, 16) à travers laquelle la lumière (10) émise par le laser (8) peut entrer dans la chambre d'écoulement (2) et sortir de la chambre d'écoulement (2), ladite au moins une fenêtre (12, 16) étant de préférence constituée en un verre.
